# FASCICULE DE BREVET EUROPEEN

(11) **EP 1 298 030 B1**
(45) Date de publication et mention de la délivrance du brevet: **03.11.2004**
(21) Numéro de dépôt: 02356185.5
(22) Date de dépôt: 26.09.2002
(51) Int. Cl.: B62D 3/12

(54) **Direction à crémaillère pour véhicule automobile**
Kraftfahrzeugzahnstangenlenkung
Motor vehicle rack-and-pinion steering

(30) Priorité: 27.09.2001 FR 0112452
(43) Date de publication de la demande: 02.04.2003
(73) Titulaire: Société de Mécanique d'Irigny, 69540 Irigny (FR)
(72) Inventeur: Pantale, M. David, 69126 Brindas (FR)
(74) Mandataire: Bratel, Gérard

(56) Documents cités:
- EP-A- 1 136 342
- PATENT ABSTRACTS OF JAPAN vol. 1999, no. 04, 30 avril 1999 (1999-04-30) -& JP 11 011336 A (UNISIA JECS CORP), 19 janvier 1999 (1999-01-19)
- PATENT ABSTRACTS OF JAPAN vol. 008, no. 076 (M-288), 9 avril 1984 (1984-04-09) -& JP 58 221767 A (NISSAN JIDOSHA KK), 23 décembre 1983 (1983-12-23)

## Description

La présente invention concerne, de façon générale, les systèmes de direction pour véhicules automobiles. Elle se rapporte, plus particulièrement, aux directions mécaniques à crémaillère, du type défini dans le préambule de la revendication 1 et connu par exemple de EP 1 136 342 A, pourvues d'un dispositif dit "ligne poussoir" qui assure un contact permanent de la crémaillère avec le pignon de direction, en compensant les jeux. Encore plus spécialement, l'invention s'intéresse à un dispositif qui, pour ce genre de direction, assure un équilibrage entre les pressions d'air à l'intérieur de la direction et à l'extérieur de celle-ci.

Une direction à crémaillère de véhicule automobile est habituellement réalisée de façon totalement étanche, afin d'éviter toute entrée indésirable d'eau ou d'humidité à l'intérieur de la direction. Ceci pose toutefois des problèmes de surpression ou de dépression dans la direction, en fonction de l'augmentation ou de la baisse de température environnante, la surpression ou dépression entraînant une déformation exagérée des soufflets de la direction, avec pour conséquence une détérioration ou destruction de ces soufflets.

Certes, il a été déjà envisagé de réaliser des directions avec soufflets "respirants", qui permettent l'entrée ou la sortie d'air. Toutefois, cette solution nécessite une fabrication spéciale, donc complexe et coûteuse, des soufflets eux-mêmes.

Par ailleurs, la "ligne poussoir" d'une direction à crémaillère comporte, dans un type de réalisation assez fréquent :
- un poussoir proprement dit, de forme adaptée au contact avec la crémaillère, qui est guidé dans une partie tubulaire solidaire du carter de direction ;
- des moyens à ressort, sous la forme d'un ressort à spires et/ou d'une ou plusieurs rondelles élastiques, qui transmettent un effort axial au poussoir, directement ou par l'intermédiaire d'une rondelle d'appui ,
- un élément vissable dans la partie tubulaire solidaire du carter, ou un élément autrement réglable en position dans cette partie tubulaire (par exemple bloqué en position par un anneau élastique, ou par tout autre moyen de retenue), ledit élément assurant la compression des moyens à ressort, tout en permettant le réglage du dispositif.

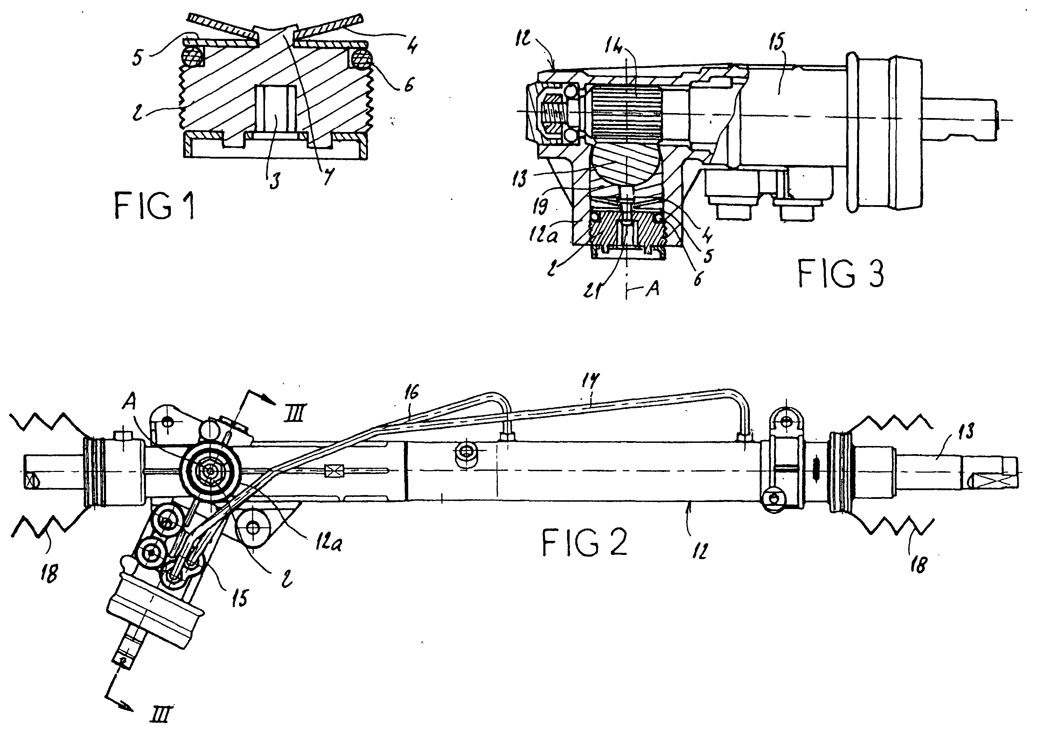

Dans une forme de réalisation particulière connue, illustrée par la figure 1 du dessin annexé, cet élément vissable est une vis de réglage 2, dont une face extrême possède une conformation creuse par exemple à six pans 3 pour sa manoeuvre à l'aide d'un outil, et dont la face opposée porte une rondelle élastique 4 et une rondelle d'appui 5. La rondelle d'appui 5 assure aussi le maintien d'un joint torique d'étanchéité 6, logé dans une gorge annulaire du corps de la vis de réglage 2. Les deux rondelles 4 et 5 sont retenues ensemble par le sertissage d'un ergot central 7 les traversant, qui fait partie intégrante du corps de la vis de réglage 2. Comme on le comprend aisément, une telle réalisation assure une séparation totalement étanche entre l'extérieur et l'intérieur de la "ligne poussoir", donc aussi entre l'extérieur et l'intérieur de la direction à crémaillère concernée.

La présente invention a pour but de fournir une direction à crémaillère avec dispositif simple et économique d'équilibrage des pressions entre l'intérieur et l'extérieur de la direction, en vue d'éviter la déformation et la détérioration des soufflets, ce dispositif mettant à profit la structure de la "ligne poussoir" qui vient d'être rappelée avec référence à la figure 1.

A cet effet, l'invention a pour objet une direction à crémaillère pour véhicule automobile, pourvue d'une "ligne poussoir" assurant un contact permanent de la crémaillère avec le pignon de direction, la "ligne poussoir" comprenant, montés dans une partie tubulaire solidaire du carter de direction, un poussoir proprement dit venant en contact avec le dos de la crémaillère, un élément vissable ou réglable en position monté derrière le poussoir, et des moyens à ressort interposés entre le poussoir et l'élément vissable ou réglable, cet élément vissable ou réglable, tel que vis de réglage, portant sur sa face tournée vers le poussoir au moins une rondelle élastique et/ou une rondelle d'appui, maintenues par leur centre sur ledit élément vissable ou réglable, cette direction à crémaillère étant caractérisée essentiellement en ce que :
- l'élément vissable ou réglable, tel que vis de réglage, possède un trou central traversant, et
- pour le maintien de la rondelle élastique et/ou de la rondelle d'appui, il est prévu un organe central du genre bouchon, réalisé au moins partiellement en une matière perméable à l'air mais hydrophobe, qui traverse lesdites rondelles et est introduit dans le trou central traversant de l'élément vissable ou réglable, tel que vis de réglage,
de manière à permettre l'équilibrage des pressions entre l'intérieur et l'extérieur de la direction, et éviter ainsi la déformation des soufflets de cette direction.

Ainsi, le principe de l'invention consiste, tout simplement, à remplacer un élément existant de la "ligne poussoir", habituellement étanche à l'eau et à l'air, par un élément de même dimension et même fonction de base, mais agencé de façon à permettre un passage de l'air tout en restant étanche aux liquides, ce qui assure l'équilibrage permanent des pressions d'air entre l'intérieur et l'extérieur de la direction (en utilisant aussi la communication habituellement existante entre les deux soufflets de la direction). La solution proposée par l'invention est donc particulièrement simple et économique.

Selon une première forme de réalisation de l'invention, l'organe du genre bouchon, reçu dans le trou central traversant de l'élément vissable ou réglable de la "ligne poussoir", tel que vis de réglage, est réalisé entièrement en une matière perméable à l'air mais hydrophobe.

Selon une deuxième forme de réalisation de l'invention, l'organe du genre bouchon, reçu dans le trou central traversant de l'élément vissable ou réglable de la "ligne poussoir", tel que vis de réglage, possède un corps tubulaire en matière étanche à l'eau et à l'air, le corps tubulaire de cet organe du genre bouchon recevant un insert central traversant en matière perméable à l'air mais hydrophobe.

Selon une troisième forme de réalisation de l'invention, l'organe du genre bouchon, reçu dans le trou central traversant de l'élément vissable ou réglable de la "ligne poussoir", tel que vis de réglage, possède un corps tubulaire en matière étanche à l'eau et à l'air, le corps tubulaire de cet organe du genre bouchon recevant, dans son passage central, une membrane transversale en matière perméable à l'air mais hydrophobe.

Dans tous les cas, l'organe du genre bouchon possède avantageusement une première tête élargie prévue pour retenir la rondelle élastique et/ou la rondelle d'appui, une partie intermédiaire du genre tige prévue pour traverser de part en part le trou central de l'élément vissable ou réglable, tel que vis de réglage, et une seconde tête, opposée à la première, prévue pour retenir l'organe du genre bouchon sur l'élément vissable ou réglable. Selon un mode de réalisation particulier, le trou central de cet élément vissable ou réglable, tel que vis de réglage, débouche au fond d'une conformation creuse par exemple à pans dudit élément vissable ou réglable, la seconde tête de l'organe du genre bouchon prenant place vers le fond de cette conformation creuse. Le montage d'un tel organe du genre bouchon, en particulier son introduction dans le trou central de la vis de réglage, s'effectue par emmanchement, en profitant de l'élasticité de la matière constitutive dudit organe du genre bouchon.

L'invention sera mieux comprise à l'aide de la description qui suit, en référence au dessin schématique annexé représentant, à titre d'exemples, quelques formes d'exécution de cette direction à crémaillère pour véhicule automobile.
Figure 1 (déjà mentionnée plus haut) est une vue en coupe d'une vis de réglage connue pour "ligne poussoir".
Figure 2 est une vue partielle, extérieure, d'une direction à crémaillère conforme à l'invention ;
Figure 3 est une vue en coupe suivant III-III de figure 2, passant par la "ligne poussoir" de la direction ;
Figure 4 est une autre vue partielle en coupe, à échelle agrandie, de la "ligne poussoir" de la figure 3, cette vue correspondant à la figure 1 et montrant une première forme de réalisation de l'invention ;
Figure 5 est une vue en coupe du bouchon seul, illustrant une variante de l'invention ;
Figure 6 est une vue en coupe du bouchon seul, illustrant une autre variante de l'invention.

La figure 2 représente extérieurement une direction à crémaillère, qui dans l'exemple illustré est une direction assistée hydraulique. Cette figure montre plus particulièrement le carter central tubulaire 12 de la direction assistée, dans lequel est montée coulissante la crémaillère 13. En se référant aussi à la figure 3, la crémaillère 13 est en prise avec un pignon rotatif 14, lié en rotation à la colonne de direction (non représentée) par l'intermédiaire d'une valve d'assistance 15, que des conduits hydrauliques 16 et 17 relient à la partie "vérin" du carter 12.

Les extrémités droite et gauche de la crémaillère 13, extérieures au carter 12, sont accouplées à des biellettes (non représentées). Deux soufflets 18, raccordés respectivement aux deux extrémités du carter 12, recouvrent et protègent les zones d'extrémité de la crémaillère 13.

Le carter de direction 12 possède une partie tubulaire 12a, ouverte vers l'extérieur, dont l'axe central A s'étend orthogonalement aux axes respectifs de la crémaillère 13 et du pignon 14. La partie tubulaire 12a loge les composants de la "ligne poussoir", bien visibles sur la figure 3.

Ces composants comprennent un poussoir proprement dit 19, guidé en coulissement suivant l'axe A dans la partie tubulaire 12a. Le poussoir 19 possède une forme adaptée au profil du dos de la crémaillère 13, et il vient en contact avec cette dernière, éventuellement par l'intermédiaire d'un patin d'appui.

En reprenant la numérotation de la figure 1, une vis de réglage 2 est montée derrière le poussoir 19, la vis de réglage 2 étant vissée dans un taraudage de la partie tubulaire 12a. Une rondelle élastique 4 est interposée entre le poussoir 19 et la vis de réglage 2 ; la rondelle élastique 4 exerce sur le poussoir 19 un effort axial, que le poussoir 19 transmet à la crémaillère 13 pour l'appuyer contre le pignon 14. Cet effort d'appui est réglable, en vissant plus ou moins profondément la vis de réglage 2 dans la partie tubulaire 12a.

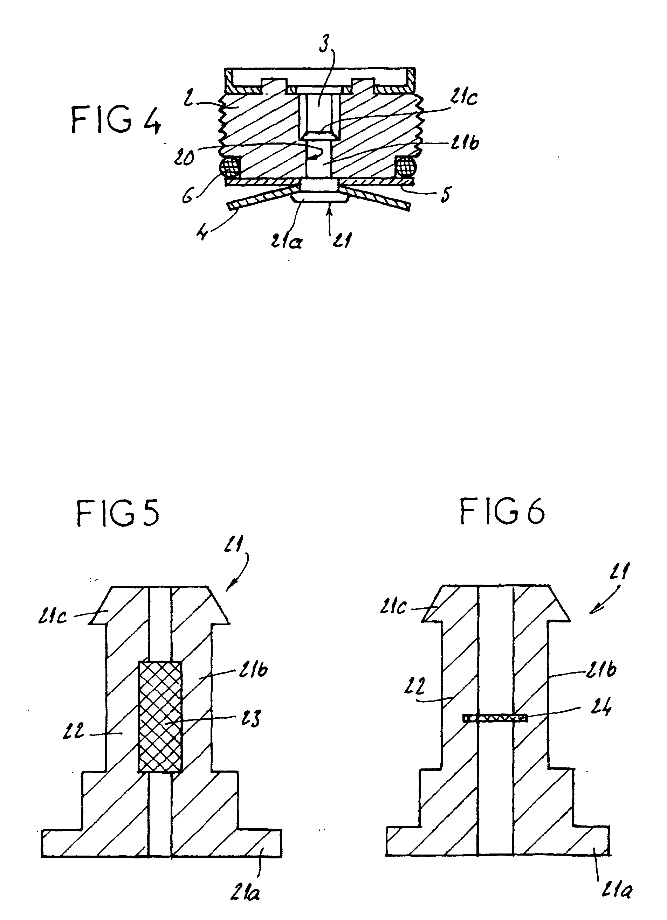

En se référant aussi à la figure 4, une rondelle d'appui 5 se trouve ici encore interposée entre la rondelle élastique 4 et une face extrême de la vis de réglage 2, et cette rondelle d'appui 5 retient ici encore un joint torique d'étanchéité 6, situé à la périphérie de la vis de réglage 2, donc au contact de la partie tubulaire 12a.

La vis de réglage 2 possède ici un trou central traversant 20. Le trou central 20 s'étend depuis la face terminale de la vis 2, recouverte par la rondelle d'appui 5, jusqu'au fond de la conformation creuse 3 prévue pour la manoeuvre de la vis 2.

La rondelle élastique 4 et la rondelle d'appui 5, qui sont accolées dans leur région centrale, sont retenues sur la vis de réglage 2 au moyen d'un bouchon 21, lequel est introduit dans le trou central traversant 20 de la vis de réglage 2.

Dans le détail, le bouchon 21 possède : une première tête élargie 21 a, qui retient les deux rondelles 4 et 5 ; une partie intermédiaire 21 b en forme de tige, qui traverse le trou central 20 de la vis de réglage 2 ; une seconde tête 21c, opposée à la tête 21a, qui prend place vers le fond de la conformation creuse à pans 3, et qui retient ainsi le bouchon 21 sur la vis de réglage 2.

Dans la forme de réalisation de la figure 4, le bouchon 21 est réalisé en une seule matière, perméable à l'air mais hydrophobe. Ainsi, le passage de l'air est rendu possible, entre l'intérieur de la direction, notamment l'intérieur du carter 2, d'une part, et l'extérieur, d'autre part. Selon les variations de température, l'air peut donc sortir de la direction ou y rentrer, de manière à équilibrer la pression entre l'intérieur de cette direction et l'extérieur, afin d'éviter la déformation des soufflets 18 et leur détérioration, notamment lorsque la température environnante augmente ou baisse fortement, le passage de l'eau et de l'humidité étant toutefois évité par la matière du bouchon 21.

La figure 5 illustre une première variante de l'invention. Le bouchon 21, prenant place dans le trou central traversant 2a de la vis de réglage 2 de la "ligne poussoir", possède ici un corps tubulaire 22 en matière étanche à l'eau et à l'air, par exemple en caoutchouc. Le corps tubulaire 22 reçoit un insert central traversant 23 en matière perméable à l'air mais hydrophobe. L'ensemble du bouchon 21 est réalisable par surmoulage.

La figure 6 illustre une autre variante de l'invention. Le bouchon 21, prenant place dans le trou central traversant 20 de la vis de réglage 2 de la "ligne poussoir", possède ici encore un corps tubulaire 22, en matière étanche à l'eau et à l'air, telle que caoutchouc. Le corps tubulaire 22 reçoit, dans son passage central, une membrane transversale 24 en matière perméable à l'air mais hydrophobe. Là aussi, l'ensemble du bouchon 21 est réalisable par surmoulage.

La matière perméable à l'air mais hydrophobe, qui selon le cas constitue le bouchon 21 complet, l'insert 23 ou la membrane 24, peut être notamment une résine polymérique fluorée poreuse, telle que celle commercialisée sous la dénomination « PERMEON » (marque enregistrée), ou toute autre matière équivalente. Le choix de cette matière, et/ou de la matière constitutive du corps 22 du bouchon 21, est aussi fait de manière à permettre le montage aisé, par emmanchement, du bouchon 21 sur la vis de réglage 2, et la bonne retenue de ce bouchon 21 sur la vis de réglage 2.

On ne s'éloignerait pas du cadre de l'invention, telle que définie dans les revendications annexées, en modifiant les détails de la vis de réglage, de la conformation creuse (à pans ou autres) de cette vis, du bouchon et des autres composants de la "ligne poussoir", tels que les rondelles, ou en choisissant d'autres matières appropriées, ou encore en destinant le même dispositif à une direction de caractéristiques différentes, qu'il s'agisse d'une direction assistée hydraulique ou électrique, ou d'une direction manuelle.

## Revendications

1. Direction à crémaillère pour véhicule automobile, pourvue d'une "ligne poussoir" assurant un contact permanent de la crémaillère (13) avec le pignon de direction (14), la "ligne poussoir" comprenant, montés dans une partie tubulaire (12a) solidaire du carter de direction (12), un poussoir proprement dit (19) venant en contact avec le dos de la crémaillère (13), un élément vissable ou réglable en position (2) monté derrière le poussoir (19), et des moyens à ressort (4) interposés entre le poussoir (19) et l'élément vissable ou réglable (2), cet élément vissable ou réglable, tel que vis de réglage (2), portant sur sa face tournée vers le poussoir (19) au moins une rondelle élastique (4) et/ou une rondelle d'appui (5), maintenues par leur centre sur ledit élément vissable ou réglable (2), **caractérisée en ce que** :
- l'élément vissable ou réglable, tel que vis de réglage (2), possède un trou central transversal (20), et
- pour le maintien de la rondelle élastique (4) et/ou de la rondelle d'appui (5), il est prévu un organe central du genre bouchon (21), réalisé au moins partiellement en une matière perméable à l'air mais hydrophobe, qui traverse lesdites rondelles (4, 5) et est introduit dans le trou central traversant (20) de l'élément vissable ou réglable, tel que vis de réglage (2),
de manière à permettre l'équilibrage des pressions entre l'intérieur et l'extérieur de la direction, et éviter ainsi la déformation des soufflets (18) de cette direction.

2. Direction à crémaillère selon la revendication 1, **caractérisée en ce que** l'organe du genre bouchon (21), reçu dans le trou central traversant (20) de l'élément vissable ou réglable de la "ligne poussoir", tel que vis de réglage (2), est réalisé entièrement en une matière perméable à l'air, mais hydrophobe.

3. Direction à crémaillère selon la revendication 1, **caractérisée en ce que** l'organe du genre bouchon (21), reçu dans le trou central traversant (20) de l'élément vissable ou réglable de la "ligne poussoir", tel que vis de réglage (2), possède un corps tubulaire (22) en matière étanche à l'eau et à l'air, le corps tubulaire (22) de ce bouchon (21) recevant un insert central traversant (24) en matière perméable à l'air mais hydrophobe.

4. Direction à crémaillère selon la revendication 1, **caractérisée en ce que** l'organe du genre bouchon (21), reçu dans le trou central traversant (20) de l'élément vissable ou réglable de la "ligne poussoir", tel que vis de réglage (2), possède un corps tubulaire (22) en matière étanche à l'eau et à l'air, le corps tubulaire (22) de ce bouchon (21) recevant, dans son passage central, une membrane transversale (24) en matière perméable à l'air mais hydrophobe.

5. Direction à crémaillère selon l'une quelconque des revendications 1 à 4, **caractérisée en ce que** l'organe du genre bouchon (21) possède une première tête élargie (21a) prévue pour retenir la rondelle élastique (4) et/ou la rondelle d'appui (5), une partie intermédiaire du genre tige (21b) prévue pour traverser de part en part le trou central (20) de l'élément vissable ou réglable, tel que vis de réglage (2), et une seconde tête (21c), opposée à la première, prévue pour retenir l'organe du genre bouchon (21) sur l'élément vissable ou réglable (2).

6. Direction à crémaillère selon la revendication 5, **caractérisée en ce que** le trou central (20) de l'élément vissable ou réglable, tel que vis de réglage (2), débouche au fond d'une conformation creuse par exemple à pans (3) dudit élément vissable ou réglable, la seconde tête (21c) de l'organe du genre bouchon (21) prenant place vers le fond de cette confirmation creuse à pans (3).

## Patentansprüche

1. Zahnstangenlenkgetriebe für ein Kraftfahrzeug, das mit einer "Andruckleitung" ausgestattet ist, die einen Dauerkontakt der Zahnstange (13) mit dem Lenkungsritzel (14) sicherstellt, wobei die "Andruckleitung", in einem rohrförmigen, mit dem Lenkgehäuse (12) einstückigen Teil (12a) angebracht, ein eigentliches, mit der Rückseite der Zahnstange (13) in Kontakt kommendes Andruckteil (19), ein hinter dem Andruckteil (19) angebrachtes verschraubbares oder positionsverstellbares Element (2) und Federeinrichtungen (4) umfasst, die zwischen dem Andruckteil (19) und dem verschraubbaren oder verstellbaren Element (2) angeordnet sind, wobei dieses verschraubbare oder verstellbare Element, wie etwa eine Einstellschraube (2), an seiner, dem Andruckteil (19) zugewandten Seite mindestens eine elastische runde Scheibe (4) und/oder eine runde Auflagescheibe (5) trägt, die mit ihrer Mitte am verschraubbaren oder verstellbaren Element (2) gehalten sind,
**dadurch gekennzeichnet, dass**
- das verschraubbare oder verstellbare Element, wie etwa die Einstellschraube (2), eine zentrale Durchgangsöffnung (20) besitzt, und
- für den Halt der elastischen runden Scheibe (4) und/oder der runden Auflagescheibe (5) ein zentrales Glied von der Art eines Stopfens (21) vorgesehen ist, das zumindest teilweise aus einem luftdurchlässigen aber wasserabweisenden Material hergestellt ist, das durch diese runden Scheiben (4, 5) hindurchgeht und das in die zentrale Durchgangsöffnung (2) des verschraubbaren oder verstellbaren Elements, wie etwa der Einstellschraube (2), so eingeführt ist,
dass der Ausgleich der Drücke zwischen dem Inneren und dem Äußeren der Lenkung ermöglicht und somit die Verformung der Balge (18) dieser Lenkung verhindert ist.

2. Zahnstangenlenkgetriebe nach Anspruch 1,
**dadurch gekennzeichnet, dass**
das Glied von der Art eines Stopfens (21), das in der zentralen Durchgangsöffnung (20) des verschraubbaren oder verstellbaren Elements der "Andruckleitung", wie etwa der Einstellschraube (2) aufgenommen ist, vollständig aus einem luftdurchlässigen aber wasserabweisenden Material hergestellt ist.

3. Zahnstangenlenkgetriebe nach Anspruch 1,
**dadurch gekennzeichnet, dass**
das Glied von der Art eines Stopfens (21), das in der zentralen Durchgangsöffnung (2) des verschraubbaren oder verstellbaren Elements der "Andruckleitung", wie etwa der Einstellschraube (2) aufgenommen ist, einen rohrförmigen Körper (22) aus einem wasser- und luftdichten Material besitzt, wobei der rohrförmige Körper (22) dieses Stopfens (21) einen zentralen Durchgangseinsatz (23) aus einem luftdurchlässigen aber wasserabweisendem Material aufnimmt.

4. Zahristangenlenkgetriebe nach Anspruch 1,
**dadurch gekennzeichnet, dass**
das Glied von der Art eines Stopfens (21), das in der zentralen Durchgangsöffnung (20) des verschraubbaren oder verstellbaren Elements der "Andruckleitung", wie etwa der Einstellschraube (2) aufgenommen ist, einen rohrförmigen Körper (22) aus einem wasser- und luftdichten Material besitzt, wobei der rohrförmige Körper (22) dieses Stopfens (21) in seinem zentralen Durchgang eine querliegende Membran (24) aus einem luftdurchlässigen aber wasserabweisenden Material aufnimmt.

5. Zahnstangenlenkgetriebe nach einem der Ansprüche 1 bis 4,
**dadurch gekennzeichnet, dass**
das Glied nach Art eines Stopfens (21) einen ersten vergrößerten Kopf (21a) besitzt, der vorgesehen ist, um die elastische runde Scheibe (4) und/oder die runde Auflagescheibe (5) zurückzuhalten, einen mittleren Teil von der Art eines Stabs (21b), der vorgesehen ist, um die zentrale Öffnung (20) des verschraubbaren oder verstellbaren Elements, wie etwa der Einstellschraube (2), vollständig zu durchqueren, und einen zweiten, dem ersten entgegengesetzten Kopf (21c), der vorgesehen ist, um das Glied von der Art eines Stopfens am verschraubbaren oder verstellbaren Element (2) zurückzuhalten.

6. Zahnstangenlenkgetriebe nach Anspruch 5,
**dadurch gekennzeichnet, dass**
die zentrale Öffnung (20) des verschraubbaren oder verstellbaren Elements, wie etwa der Einstellschraube (2), am Grunde einer vertieften bzw. hohlen Gestaltung mündet, die beispielsweise die Kanten (3) des verschraubbaren oder verstellbaren Elements aufweist, wobei der zweite Kopf (21c) des Glieds von der Art eines Stopfens (21) zum Grunde dieser vertieften bzw. hohlen Gestaltung mit den Kanten (3) hin zu liegen kommt.

## Claims

1. A rack and pinion steering system for an automobile vehicle, provided with a "pusher line" which ensures permanent contact of the rack (13) with the steering pinion (14), said "pusher line" comprising, mounted in a tubular part (12a) which is integral with the steering housing (12), what is strictly termed a pusher (19) which comes into contact with the back of the rack (13), an element (2) which can be screwed in or out or the position of which can be adjusted and which is mounted behind the pusher (19), and spring means (4) interposed between the pusher (19) and the element (2) which can be screwed in or out or adjusted, said element which can be screwed in or out or adjusted, such as an adjusting screw (2), bearing on its face facing the pusher (19) at least one spring washer (4) and/or one supporting washer (5) which are retained by their centres on said element (2) which can be screwed in or out or adjusted, **characterised in that**:
- the element which can be screwed in or out or adjusted, such as an adjusting screw (2), has a central through hole (20), and
- for the retention of the spring washer (4) and/or of the supporting washer (5), a central element (21) is provided in the form of a plug which is made, at least in part, of a material which is permeable to air but which is hydrophobic, which passes through said washers (4, 5) and which is introduced into the central through hole (20) in the element which can be screwed in or out or adjusted, such as an adjusting screw (2),
so as to permit equilibration of pressure between the inside and the outside of the steering system and thus to prevent deformation of the bellows (18) of said steering system.

2. A rack and pinion steering system according to claim 1, **characterised in that** the element (21) in the form of a plug which is received in the central through hole (20) in the element of the "pusher line" which can be screwed in or out or adjusted, such as an adjusting screw (2), is made entirely of a material which is permeable to air but which is hydrophobic.

3. A rack and pinion steering system according to claim 1, **characterised in that** the element (21) in the form of a plug which is received in the central through hole (20) in the element of the "pusher line" which can be screwed in or out or adjusted, such as an adjusting screw (2), has a tubular body (22) made of a material which is impermeable to water and air, the tubular body (22) of said plug (21) receiving a central insert (24) which passes through it and which is made of a material which is permeable to air but which is hydrophobic.

4. A rack and pinion steering system according to claim 1, **characterised in that** the element (21) in the form of a plug which is received in the central through hole (20) in the element of the "pusher line" which can be screwed in or out or adjusted, such as an adjusting screw (2), has a tubular body (22) made of a material which is impermeable to water and air, the tubular body (22) of said plug (21) receiving, in its central passage, a transverse diaphragm (24) made of a material which is permeable to air but which is hydrophobic.

5. A rack and pinion steering system according to any one of claims 1 to 4, **characterised in that** the element (21) in the form of a plug has a first, enlarged head (21a) which is provided for retaining the spring washer (4) and/or the supporting washer (5), an intermediate part in the form of a shank (21b) which is provided for passing right through the central through hole (20) in the element which can be screwed in or out or adjusted, such as an adjusting screw (2), and a second head (21c), opposite the first, which is provided for retaining the element in the form of a plug (21) on the element (2) which can be screwed in or out or adjusted.

6. A rack and pinion steering system according to claim 5, **characterised in that** the central through hole (20) in the element which can be screwed in or out or adjusted, such as an adjusting screw (2), leads into the base of a hollow formation (3), which is polygonal, for example, in said element which can be screwed in or out or adjusted, the second head (21c) of the element in the form of a plug (21) being situated towards the base of said hollow, polygonal formation (3).
